# EUROPEAN PATENT SPECIFICATION

(11) **EP 3 316 032 B1**
(45) Date of publication and mention of the grant of the patent: **02.12.2020**
(21) Application number: 17199469.2
(22) Date of filing: 31.10.2017
(51) Int. Cl.: G02F 1/1347

(54) **LIQUID CRYSTAL DISPLAY HAVING LIGHT VALVE**
FLÜSSIGKRISTALLANZEIGE MIT LICHTVENTIL
AFFICHAGE À CRISTAUX LIQUIDES AYANT UN MODULATEUR DE LUMIÈRE

(30) Priority: 31.10.2016 KR 20160142970
(43) Date of publication of application: 02.05.2018
(73) Proprietor: LG Display Co., Ltd., Seoul, 07336 (KR)
(72) Inventor: KIM, Wondoo, 10845 Gyeonggi-do (KR); PARK, Kibok, 10845 Gyeonggi-do (KR); LEE, Joondong, 10845 Gyeonggi-do (KR); KIM, Kakyung, 10845 Gyeonggi (KR)
(74) Representative: Morrall, Jonathan Ian McLachlan

(56) References cited:
- WO-A2-2012/148983
- US-A1- 2007 242 028
- US-A1- 2008 284 951
- US-A1- 2009 135 317

## Description

### Field

The present disclosure relates to a liquid crystal display (LCD) including a light valve. In particular, the present disclosure relates to a liquid crystal display having a first liquid crystal display for the light valve and a second liquid crystal display for displaying video in which black and white contrast is enhanced.

### Background

Thanks to characteristics such as light weight, thinness and low power consumption, liquid crystal displays are widely used for various applications. Liquid crystal displays are used for portable computers, office automation appliances, audio/video devices, commercial displays and so on. The most common type of liquid crystal display, the transmissive type liquid crystal display, represents video images by controlling light transmissivity of a liquid crystal layer using an electric field.

As the most commonly encountered type of flat panel display, liquid crystal displays are used in various fields. For example, they can be used in transparent displays that display video images when turned on and are transparent like glass when turned off.

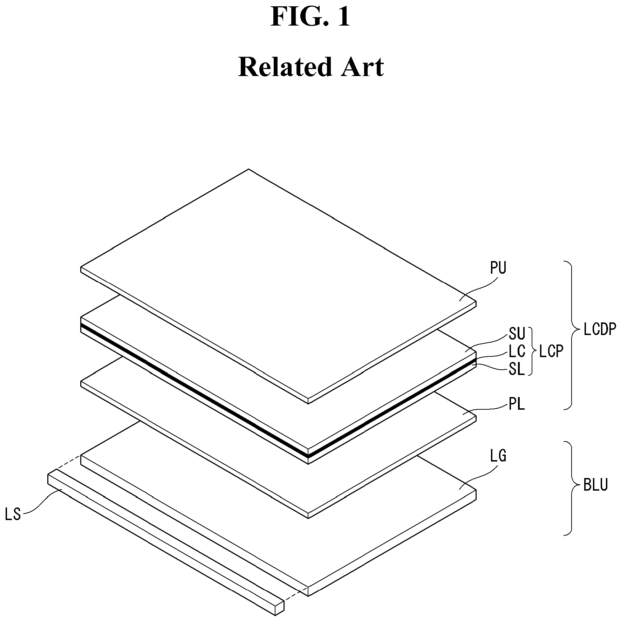

FIG. 1 is a perspective view illustrating the structure of a liquid crystal display according to the related art. A liquid crystal display according to the related art comprises a display panel LCDP and a back light unit BLU. The display panel LCDP includes a first polarization plate PU and a second polarization plate PL wherein light transmittance axes of the plates are perpendicular to each other, and a liquid crystal panel LCP is inserted between these two polarization plates PU and PL.

The liquid crystal panel LCP includes an upper substrate SU, a lower substrate SL and a liquid crystal layer LC disposed between these two substrates SU and SL. At the upper outer surface and the lower outer surface of the liquid crystal panel LCP, an upper polarization plate PU and a lower polarization plate PL are attached, respectively. Even though it is not shown in the figure, the upper substrate SU and the lower substrate SL may further include lines and a black matrix defining pixel areas disposed in a matrix, and a common electrode and a pixel electrode for driving the liquid crystal layer LC. Further, various color filters may be included for representing colors.

The upper polarization plate PU is attached on the outer surface of the upper substrate SU, the lower polarization plate PL is attached on the outer surface of the lower substrate SL. To allow a black image to be displayed, the upper polarization plate PU and the lower polarization plate PL are preferably disposed such that their light transmittance axes cross perpendicularly.

The back light unit BLU is disposed under the display panel LCDP. The back light unit BLU has a light guide plate LG and a light source LS. The light source LS is disposed at one side of the light guide plate LG for radiating light into the light guide plate LG. The light guide plate LG distributes the light received from the light source LS over the whole area of the light guide plate LG and sends most of the light to the upper surface facing the display panel LCDP. To do so, a reflective pattern may be formed on the lower surface of the light guide plate LG.

Liquid crystal displays are used in various fields and are not only for computer monitors or television sets. Recently, flat panel displays have been applied to automobile instrument panels. It is necessary that the automobile instrument panel provides data and information to the driver clearly and visually. Therefore, a display for an automobile instrument panel is preferably not affected by the brightness of ambient light, and can clearly present the correct color and brightness of video data.

Further, a touch input function on the automobile instrument panel may be required so that a driver can easily and quickly check and/or confirm data needed for driving. There should be no deterioration or distortion of the visual data on the instrument panel when conducting the touch operation. The requirement for a flat panel display showing visual data exactly and stably in any situation is increasing as liquid crystal displays are applied to various fields.

US 2008/284951 A1 discloses a liquid crystal display (LCD) device including a backlight assembly, a contrast ratio increasing LCD panel and an image displaying LCD panel.

WO 2012/148983 A2 discloses a display including an image-generating panel and at least one contrast-enhancing panel, a cross BEF collimator between a backlight and one of the panels, and a polarization-preserving diffuser (e.g., holographic diffuser) between the panels.

US 2009/135317 A1 discloses a display unit including an LCD which receives an array of pixel data for displaying an image at a first dynamic range.

US 2007/242028 A1 discloses an LCD device including first and second LCD panels stacked one on another The preamble of claim 1 is based on this disclosure.

### SUMMARY

An invention is set out in the independent claim. The examples of the following description that are not covered by the appended claims are considered to be useful for understanding the invention.

In order to overcome the above mentioned drawbacks, the purpose of the present disclosure is to provide a liquid crystal display having a superior contrast ratio and stable full black scale and dark blacks. Another purpose of the present disclosure is to provide a liquid crystal display having superior video quality without image noise, such as a moire and/or mura noise pattern, under any conditions.

In order to accomplish the above, the present invention provides a liquid crystal display comprising: a back light unit; a light valve panel disposed in front of the back light unit, and including a plurality of first unit pixel areas; and a video display panel disposed in front of the light valve panel, and including a plurality of second unit pixel areas.

The first unit pixel area and the second unit pixel area overlap each other and are mis-aligned with each other.

The first unit pixel area has a rhomboid shape, and the second unit pixel area has a quadrate shape.

The rhomboid shape corresponds to the quadrate shape rotated by 45 degrees.

In some embodiments, the first unit pixel area has a different size to the second unit pixel area.

In some embodiments, the first unit pixel area has a size selected from between 0.5 times to 2.8 times the second unit pixel area.

In some embodiments, the light valve panel includes: a data line running in a vertical direction along the rhomoid shape; a gate line running in a horizontal direction along the rhomboid shape; a thin film transistor disposed at one corner of the rhomboid shape; and a pixel electrode connected to the thin film transistor, and disposed within the first unit pixel area.

In some embodiments, the liquid crystal display further comprises a white color filter disposed in the first unit pixel area.

In some embodiments, the second unit pixel area includes a plurality of sub pixel areas.

In some embodiments, the sub pixel areas of the second unit pixel area include: a red sub pixel; a green sub pixel; and a blue sub pixel.

As a light valve is included between the display panel and the back light unit, the liquid crystal display according to the present disclosure provides superior video quality in which a full black scale or dark black can be stably presented with a high black and white contrast ratio, under any situation and ambient condition. As the unit pixel of the light valve irregularly overlaps with the unit pixel area of the display panel, the liquid crystal display according to the present disclosure has no light noise pattern such as a moiré or mura pattern. Further, as the unit pixel of the light valve has a different shape and size to the unit pixel area of the display panel, this ensures that the aperture ratio has a maximum value.

### BRIEF DESCRIPTION OF THE DRAWINGS

The accompanying drawings, which are included to provide a further understanding of the disclosure and are incorporated in and constitute a part of this specification, illustrate embodiments of the disclosure and together with the description serve to explain the principles of the disclosure.
FIG. 1 is a perspective view illustrating the structure of a liquid crystal display according to the related art.
FIG. 2 is a cross-sectional view illustrating a structure of a liquid crystal display having a light valve according to the present disclosure.
FIG 3 is a plan view illustrating the structure of a liquid crystal panel of the light valve according to an example useful for understanding the present invention.
FIG. 4 is a plan view illustrating the structure of a liquid crystal panel for showing video images according to said example useful for understanding the present invention.
FIG. 5 is a plan view illustrating the positions of a liquid crystal panel for the light valve and a liquid crystal panel for displaying a video image in a liquid crystal display having a light valve according to a first embodiment of the present disclosure.
FIG. 6 is a plan view illustrating a structure of the liquid crystal panel for a light valve according to the first embodiment of the present disclosure.

### DETAILED DESCRIPTION

Referring to attached figures, preferred embodiments of the present disclosure will be described. Like reference numerals designate like elements throughout the detailed description. However, the present disclosure is not restricted by these embodiments but can be applied to various changes or modifications. In the following embodiments, the names of the elements are selected for ease of explanation and may be different to actual names.

### <Example>

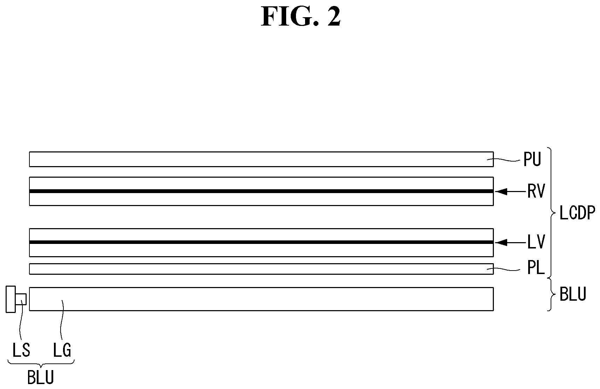

Referring to FIG. 2, the example useful for understanding the present invention will be explained. FIG. 2 is a cross-sectional view illustrating a structure of a liquid crystal display having a light valve according to the example A liquid crystal display having a light valve according to the example comprises a display panel LCDP and a back light unit BLU.

The display panel LCDP includes a lower polarization plate PL, a light valve panel LV, a video display panel RV and an upper polarization plate PU. The video display panel RV is disposed on the light valve panel LV.

As the light valve panel LV and the video display panel RV are liquid crystal display panels, polarization plates are required. For example, the lower polarization plate PL is disposed under the rear surface of the light valve panel LV. The upper polarization plate PU is disposed on the front surface of the video display panel RV.

The back light unit BLU is disposed under the display panel LCP, i.e., under the lower polarization plate PL. The back light unit BLU includes a light guide plate LG and a light source LS. The light source LS is disposed at one side surface of the light guide plate LG to provide light into the light guide plate LG. The light guide plate LG distributes the light received from the light source LS over the whole inside volume of the light guide plate LG, and sends most of the light to the upper side facing the display panel LCDP. To do so, a light reflection pattern may be included at the lower surface of the light guide plate LG.

Here, the back light unit BLU is an edge type back light unit in which the light source LS is placed facing one side surface of the light guide plate LG. However, the back light unit BLU of the example is not restricted to edge type, but instead may be a direct type back light unit in which the light source is placed under the light guide plate or the diffusion plate. Even though it is not shown in the figure, one or more optical sheets may be disposed on the upper surface of the light guide plate LG for enhancing the light concentration and diffusion.

The light valve LV is for enhancing black uniformity, that is, the same brightness contrast can be represented with the same (or a very similar) value on any area of the display panel LCDP. In addition, it is for enhancing the contrast ratio (or, CR) between white and black. Therefore, it is preferable that the light valve panel LV does not have a color filter.

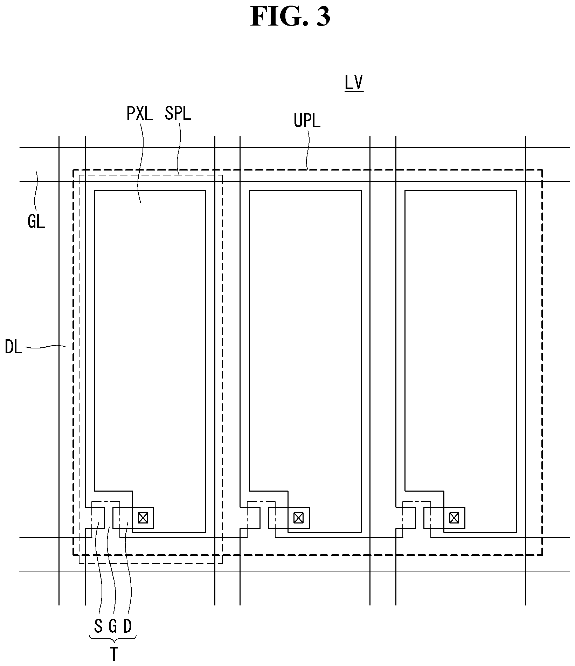

Referring to FIG. 3, we explain the case in which the light valve panel LV is a liquid crystal panel. FIG. 3 is a plan view illustrating the structure of a liquid crystal panel for the light valve according to the example On a transparent substrate, a plurality of the unit pixel areas UPL is disposed in a matrix. A unit pixel area UPL may include three sub pixel areas SPL.

One sub pixel area SPL may be defined by the crossing structure of the gate line GL running in a horizontal direction on the substrate and the data line DL running in a vertical direction on the substrate. Within the sub pixel area SPL, a thin film transistor T and a pixel electrode PXL are disposed. The thin film transistor T includes a gate electrode G branched from the gate line GL, a source electrode S branched from the data line DL and a drain electrode D. The pixel electrode PXL is connected to the drain electrode D.

The unit pixel area UPL may have a square shape (or quadrate shape) in which the horizontal side has the same length as the vertical side. Therefore, the sub pixel area SPL may have a rectangular shape in which the ratio of the horizontal line to the vertical line is 1:3.

As the light valve panel LV is for adjusting the brightness, a color filter is not included in the sub pixel area SPL. All sub pixel areas SPL have no color filter. Otherwise, if required, a white color filter may be disposed on the light valve panel LV.

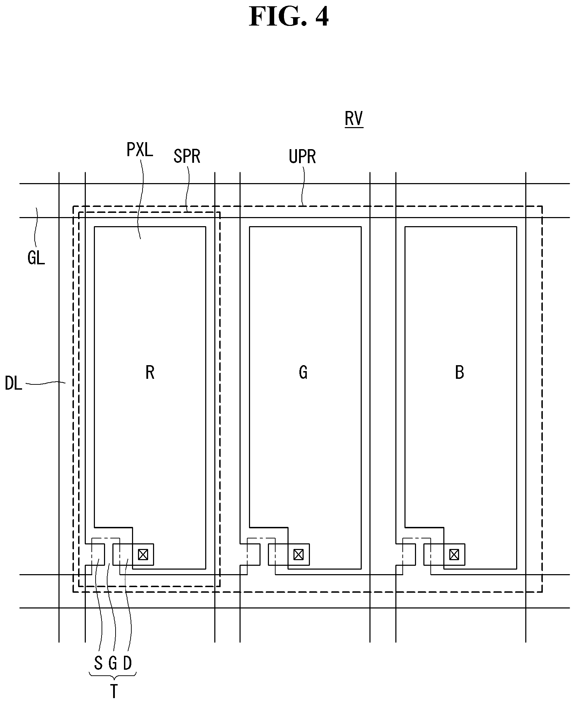

The video display panel RV is for representing video data or information. Referring to FIG. 4, the video display panel RV which is a liquid crystal display will now be described. FIG. 4 is a plan view illustrating the structure of a liquid crystal panel for displaying video images according to the example.

The video display panel RV may have the same structure as that of the light valve panel LV. For example, a plurality of unit pixel areas UPR may be disposed on a transparent substrate in a matrix. One unit pixel area UPR may have three sub pixel areas SPR.

One sub pixel area SPR may be defined by the crossing structure of the gate line GL running in a horizontal direction on the substrate and the data line DL running in a vertical direction on the substrate. Within the sub pixel area SPR, a thin film transistor T and a pixel electrode PXL arc disposed. The thin film transistor T includes a gate electrode G branched from the gate line GL, a source electrode S branched from the data line DL and a drain electrode D. The pixel electrode PXL is connected to the drain electrode D.

The unit pixel area UPR may have a quadrate shape in which the horizontal side has the same length as the vertical side. Therefore, the sub pixel area SPR may have a rectangular shape in which the ratio of the horizontal line to the vertical line is 1:3.

As the video display panel RV provides video images to the observer, it is preferable that color filters are included. For example, each sub pixel area SPR has one color filter for representing one of red R, green G and blue B.

A liquid crystal display having a light valve according to the example has a structure in which the video display panel RV is stacked on the light valve panel LV. For example, each unit pixel area UPL of the light valve LV may be aligned with each unit pixel area UPR of the video display panel RV with a one to one arrangement.

In this case, as the unit pixels UPR and UPL with the same shape and size overlap each other, a light noise pattern known as a moiré or mura pattern may arise. These light noise patterns are not related to the video data or information. Theses may cause confusion or fool the observer, such that the observer cannot recognize the video information.

Further, as the light valve panel LV and the video display panel RV are joined, the unit pixel areas UPR and UPL may be mis-aligned. In this instance, the black matrix disposed between the unit pixel areas UPR or UPL has a wider area. That is, due to the alignment tolerance, more aperture areas may be covered by a black matrix such that the aperture ratio may be reduced.

In order to prevent reduction of the aperture ratio, the unit pixel area UPL of the light valve panel LV may be larger than the unit pixel area UPR of the video display panel RV. For example, the light valve panel LV may include a plurality of unit pixel areas UPL that are 1.2 to 1.5 times larger in area than the unit pixel areas UPR of the video display panel RV.

In this instance, even though the light valve panel LV is joined to the video display panel RV, the unit pixel area UPL of the light valve panel LV is not aligned with the unit pixel area UPR of the video display panel RV, but irregularly mis-aligned. As the unit pixel area UPL of the light valve panel LV has a larger area than the unit pixel area UPR of the video display panel RV, the black matrix area may be reduced. That is, the aperture ratio of the video display panel RV is not lowered.

However, with such a structure, the lines of the light valve panel LV are parallel to the lines of the video display panel RV. As lines with a grid pattern are parallel and overlapped, the light from the back light unit may form a light noise pattern such as a moiré and/or mura pattern due to diffraction by the grid pattern of the lines.

### <First Embodiment>

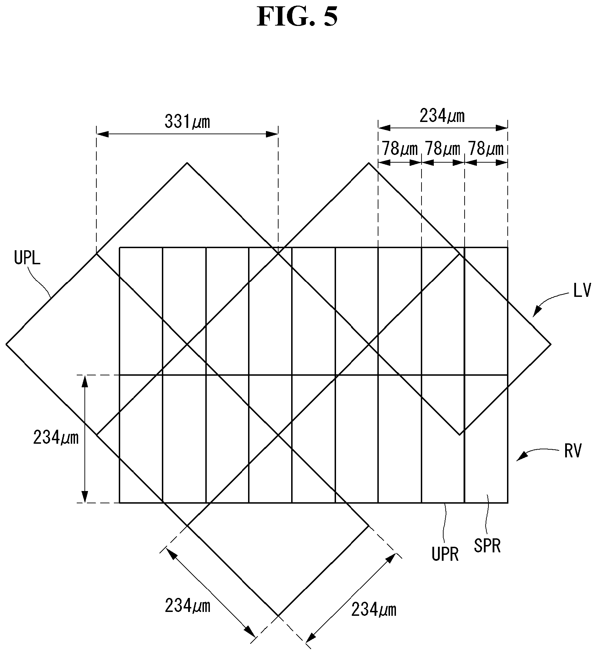

Hereinafter, referring to FIG. 5, the first embodiment of the present disclosure will now be described. In the first embodiment, we suggest a structure of the liquid crystal display having a light valve in which a light noise pattern such as a moiré pattern does not occurr and the aperture ratio is not reduced due to misalignment. FIG. 5 is a plan view illustrating positioning of a liquid crystal panel for the light valve and a liquid crystal panel for displaying a video image in a liquid crystal display having a light valve according to the first embodiment of the present disclosure. As the structure of the cross sectional view is the same as in the example, FIG. 2 may also be referred to.

The liquid crystal display according to the first embodiment of the present disclosure comprises a display panel LCDP and a back light unit BLU. The display panel LCDP includes a lower polarization plate PL, a light valve panel LV, a video display panel RV and an upper polarization plate PU. The video display panel RV is disposed on the light valve panel LV.

As the light valve panel LV and the video display panel RV are liquid crystal display panels, polarization plates are required. For example, a lower polarization plate PL is disposed under the rear surface of the light valve panel LV. An upper polarization plate PU is disposed on the front surface of the video display panel RV.

The back light unit BLU is disposed under the display panel LCP, i.e., under the lower polarization plate PL. The back light unit BLU includes a light guide plate LG and a light source LS. The light source LS is disposed at one side surface of the light guide plate LG to shine light into the light guide plate LG. The light guide plate LG distributes the light received from the light source LS over the whole inside volume of the light guide plate LG, and sends most of the light to the upper side facing the display panel LCDP. To do so, a light reflection pattern may be further included at the lower surface of the light guide plate LG.

The liquid crystal display having a light valve according to the first embodiment comprises a key feature regarding how the light valve panel LV and the video display panel RV are arragned. Specifically, the feature concerns the structure of the overlap between a unit pixel area UPL of the light valve panel LV and a unit pixel area UPR of the video display panel RV. In FIG. 5, the structure and orientation of these unit pixel areas for clearly showing this feature of the first embodiment is shown.

The video display panel RV may have the same structure and may be disposed in the same way as in the example. Here, a description of the detailed structure of the video display panel RV is not duplicated. However, the light valve panel LV may have a different structure to the example. For example, the light valve panel LV includes a plurality of unit pixel areas having a diamond shape relative to the unit pixel areas UPR of the video display panel RV disposed in a matrix. The video display panel RV includes a plurality of unit pixel areas UPR having a quadrate shape and disposed in a matrix.

Rhomboid unit pixel areas UPL of the light valve panel LV overlap with the quadrate unit pixel areas UPR of the video display panel RV. For example, a unit pixel area UPL of the light valve panel LV may have a diamond shape (or rhomboid shape) that is 331*µ*m (micrometers) from corner to opposite corner. As a result, the unit pixel area UPL of the light valve panel LV may be a rhombus with 234*µ*m (micrometers) sides similar to a square rotated by 45 degrees relative to the unit pixel areas UPR of the video display panel RV. The unit pixel areas UPL of the light valve panel LV may not have sub pixel areas, but have only one pixel body instead.

The unit pixel area UPR of the video display panel RV may have a quadrate shape wherein the sides are 234*µ*m (micrometers) long. The unit pixel area UPR of the video display panel RV may have at least three sub pixel areas SPR. For example, one sub pixel area SPR may have a rectangular shape 78 *µ*m (micrometers) wide and 234 *µ*m (micrometers) long.

As the unit pixel area UPL of the light valve panel LV and the unit pixel area UPR of the video display panel RV have a different shape from each other and overlap each other, the light from the back light unit may not be diffracted by the pattern of the unit pixel areas. Therefore, light noise patterns such as moiré and/or mura patterns seen in the example are not present in the first embodiment.

The overlapping or alignment between the unit pixel area UPL of the light valve panel LV and the unit pixel area UPR of the video display panel RV may vary. For example, any one corner of the rhomboid shape in the unit pixel area UPL of the light valve panel LP may correspond to any side of the quadrate shape of the unit pixel area UPR of the video display panel RV. Otherwise, the light valve panel LV is joined to the video display panel RV such that one corner of the rhombus may correspond to any one corner of the quadrate.

Preferably, the rhombus and the quadrate may overlapp with any arrangement, i.e., they overlap irregularly. For example, one corner of the rhombus of the unit pixel area UPL of the light valve panel LV may be disposed at any point inside of the unit pixel area UPR of the video display panel RV. The corner of the rhombus may be disposed at the center of the quadrate. Preferably, in order to achieve an irregular arrangement, as shown in FIG. 5, one corner of the rhombus of the unit pixel area UPL of the light valve panel LV may be disposed to one side of the center point of the quadrate of the unit pixel UPR of the video display panel RV.

In the above description, for convenience, the rhombus of the unit pixel area UPL of the light valve panel LV has the same size as the quadrate of the unit pixel area UPR of the video display panel RV. However, to prevent light noise more effectively, the size of the unit pixel area UPL of the light valve panel LV may different to the size of the unit pixel area UPR of the video display panel RV. For example, the size of the unit pixel area UPL of the light valve panel LV may be twice the size of the unit pixel area UPR of the video display panel RV. Alternatively, the unit pixel area UPL of the light valve panel LV may have any rational number multiple of the size of the unit pixel UPR of the video display panel RV.

For example, the size of the unit pixel area UPL of the light valve panel LV may be 1.2 to 1.8 times the size of the unit pixel area UPR of the video display panel RV. Otherwise, the size of the rhombus may be 2.2 to 2.8 times the size of the quadrate. As a further example, the size of the unit pixel area UPL of the light valve panel LV may be 0.5 to 0.9 times the size of the unit pixel area UPR of the video display panel RV. The size ratio may be 0.5, 0.7, 0.9, 1.2, 1.5, 1.8, 2.2 or 2.8. That is, considering the manufacturing process and the product application field, the size ratio may be between 0.5 and 2.8.

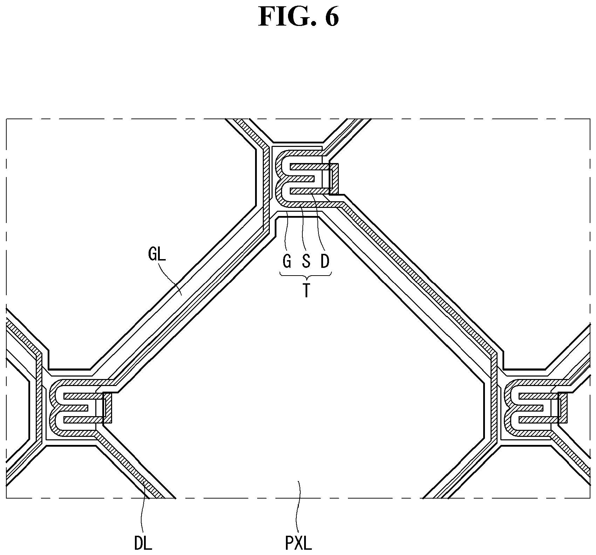

Hereinafter, referring to FIG. 6, an example of the light valve panel included in the liquid crystal display according to the ; first embodiment of the present disclosure will be described. FIG. 6 is a plan view illustrating an example of the structure of the liquid crystal panel for a light valve according to the first embodiment of the present disclosure.

Referring to FIG. 6, the light valve panel according to the first embodiment comprises a plurality of pixel areas disposed in a matrix on a substrate. The pixel areas have a diamond or a rhomboid shape.

In detail, on the substrate, there is a data line DL running in a vertical direction and a gate line GL running in a horizontal direction. The data line DL has a chevron shape along the rhomboid shape. Also, the gate line GL has a chevron shape along the rhomboid shape. The thin film transistor T may be located at one corner of the rhombus where the gate line GL and the data line DL cross.

The thin film transistor T includes a gate electrode G, a source electrode S and a drain electrode D. The gate electrode G may have a rectangular shape branched from the gate line GL. The source electrode S branches from the data line DL and overlaps with one side of the gate electrode G. As shown in FIG. 6, the source electrode S may have an 'E' shape. The drain electrode D is disposed apart from the source electrode S by a predetermined distance. As shown in FIG. 6, the drain electrode D may have a reversed 'C' shape.

The drain electrode D of the thin film transistor T is connected to the pixel electrode PXL. The pixel electrode PXL is disposed within an area surrounded by the data line DL and the gate line GL. The pixel electrode PXL may have a rhomboid shape corresponding to the shape of the unit pixel area UPL of the light valve panel LV.

FIG. 6 shows that the thin film transistor T has a small rectangular shape at one corner of the unit pixel area having a rhomboid shape. However, the shape of the thin film transistor T is not restricted this shape. For example, the thin film transistor T may have a triangular shape. Otherwise, the thin film transistor T may have a segmented shape and overlap any side of the rhombus of the unit pixel area UPL of the light valve panel LV. It is preferable that the thin film transistor T of the light valve panel LV has a shape for minimizing the aperture ratio reduction of the video display panel RV. Further, the location of the thin film transistor T of the light valve panel LV may be defined as minimizing the aperture ratio reduction of the video display panel RV.

While the embodiments of the present invention have been described in detail with reference to the drawings, it will be understood by those skilled in the art that the invention can be implemented in other specific forms without changing the essential features of the disclosure. Therefore, it should be noted that the forgoing embodiments are merely illustrative in all aspects and are not to be construed as limiting the disclosure. The scope of the invention is defined by the appended claims rather than the detailed description of the disclosure.

## Claims

1. A liquid crystal display, comprising:
a back light unit (BLU);
a light valve panel (LV) disposed on the back light unit, and including a plurality of first unit pixel areas (UPR); and
a video display panel (RV) disposed on the light valve panel, and including a plurality of second unit pixel areas (UPL), **characterised in that** each first unit pixel area has a rhomboid shape and each second unit pixel area has a quadrate shape, wherein the rhomboid shape corresponds to the quadrate shape rotated by 45 degrees.

2. The liquid crystal display according to the claim 1, wherein the light valve panel includes:
a data line (DL) running in a first direction and along each first unit pixel area;
a gate line (GL) running in a second direction and along each first unit pixel area;
a thin film transistor (T) disposed at one corner of each first unit pixel area; and
a pixel electrode (PXL) connected to the thin film transistor, and disposed within each first unit pixel area.,
wherein the first direction is perpendicular to the second direction.

3. The liquid crystal display according to any preceding claim, wherein each second unit pixel area includes a plurality of sub pixel areas (SPR).

4. The liquid crystal display according to the claim 3, wherein each sub pixel areas of the second unit pixel area includes:
a red (R) sub pixel;
a green (G) sub pixel; and
a blue (B) sub pixel.

5. The liquid crystal display according to any precedingclaim,
wherein each first unit pixel area has a different size to each second unit pixel area.

6. The liquid crystal display according to the claim 1, wherein each first unit pixel area has a size between 0.5 times to 2.8 times each second unit pixel area.

## Patentansprüche

1. Flüssigkristallanzeige, die Folgendes umfasst:
eine Rückbeleuchtungseinheit (BLU);
ein Lichtventilpanel (LV), angeordnet auf der Rückbeleuchtungseinheit und mehrere erste Einheitspixelgebiete (UPR) beinhaltend; und
ein Videoanzeigepanel (RV), angeordnet auf dem Lichtventilpanel und mehrere zweite Einheitspixelgebiete (UPL) aufweisend,
**dadurch gekennzeichnet, dass**
jedes erste Einheitspixelgebiet eine Rhombenform aufweist und jedes zweite Einheitspixelgebiet eine Quadratform aufweist, wobei die Rhombenform der um 45 Grad gedrehten Quadratform entspricht.

2. Flüssigkristallanzeige nach Anspruch 1, wobei das Lichtventilpanel Folgendes beinhaltet:
eine Datenleitung (DL), die in einer ersten Richtung und entlang jedem ersten Einheitspixelgebiet verläuft;
eine Gate-Leitung (GL), die in einer zweiten Richtung und entlang jedem ersten Einheitspixelgebiet verläuft;
einen Dünnfilmtransistor (T), angeordnet an einer Ecke von jedem ersten Einheitspixelgebiet; und
eine Pixelelektrode (PXL), verbunden mit dem Dünnfilmtransistor und angeordnet innerhalb jedes ersten Einheitspixelgebiets,
wobei die erste Richtung zu der zweiten Richtung senkrecht ist.

3. Flüssigkristallanzeige nach einem vorhergehenden Anspruch, wobei jedes zweite Einheitspixelgebiet mehrere Subpixelgebiete (SPR) beinhaltet.

4. Flüssigkristallanzeige nach Anspruch 3, wobei jedes Subpixelgebiet des zweiten Einheitspixelgebiets Folgendes beinhaltet:
ein rotes (R) Subpixel;
ein grünes (G) Subpixel; und
ein blaues (B) Subpixel.

5. Flüssigkristallanzeige nach einem vorhergehenden Anspruch,
wobei jedes erste Einheitspixelgebiet gegenüber jedem zweiten Einheitspixelgebiet eine andere Größe aufweist.

6. Flüssigkristallanzeige nach Anspruch 1, wobei jedes erste Einheitspixelgebiet eine Größe zwischen 0,5 Mal bis 2,8 Mal jedes zweite Einheitspixelgebiet aufweist.

## Revendications

1. Affichage à cristaux liquides, comprenant :
une unité de rétroéclairage (BLU) ;
un panneau à modulateur de lumière (LV) disposé sur l'unité de rétroéclairage, et comprenant une pluralité de premières zones de pixels unitaires (UPR) ; et
un panneau d'affichage vidéo (RV) disposé sur le panneau à modulateur de lumière, et comprenant une pluralité de secondes zones de pixels unitaires (UPL),
**caractérisé en ce que** :
chaque première unité de pixel a une forme rhomboïdale et chaque seconde unité de pixel a une forme quadrangulaire, où la forme rhomboïdale correspond à la forme quadrangulaire tournée de 45 degrés.

2. Affichage à cristaux liquides selon la revendication 1, dans lequel le panneau à modulateur de lumière comprend :
une ligne de données (DL) s'étendant dans une première direction et le long de chaque première zone de pixel unitaire ;
une ligne de portes (GL) s'étendant dans une seconde direction et le long de chaque première zone de pixel unitaire ;
un transistor à couche mince (T) disposé à un coin de chaque première zone de pixel unitaire ; et
une électrode de pixel (PXL) connectée au transistor à couche mince, et disposée dans chaque première zone de pixel unitaire,
où la première direction est perpendiculaire à la seconde direction.

3. Affichage à cristaux liquides selon l'une quelconque des revendications précédentes, dans lequel chaque seconde zone de pixel unitaire comprend une pluralité de sous-zones de pixel (SPR).

4. Affichage à cristaux liquides selon la revendication 3, dans lequel chaque sous-zone de pixel de la seconde zone de pixel unitaire comprend :
un sous-pixel rouge (R) ;
un sous-pixel vert (G) ; et
un sous-pixel bleu (B).

5. Affichage à cristaux liquides selon l'une quelconque des revendications précédentes,
dans lequel chaque première zone de pixel unitaire a une taille différente de chaque seconde zone de pixel unitaire.

6. Affichage à cristaux liquides selon la revendication 1, dans lequel chaque première zone de pixel unitaire a une taille comprise entre 0,5 fois et 2,8 fois chaque seconde zone de pixel unitaire.
